# EUROPEAN PATENT APPLICATION

(11) **EP 1 548 429 A1**
(43) Date of publication of application: **29.06.2005**
(21) Application number: 03799096.7
(22) Date of filing: 05.09.2003
(51) Int. Cl.: G01N 27/447

(54) **METHOD FOR SEPARATING SUBSTANCES**

(30) Priority: 05.09.2002 JP 2002259889; 26.05.2003 JP 2003148118
(71) Applicant: Katayanagi Institute, Hachioji-shi, Tokyo 192-0981 (JP); National Institute of Advanced Industrial Science and Technology, Tokyo 100-8921 (JP)
(72) Inventor: HIRATSUKA, Atsunori, Sagamihara-shi, Kanagawa 229-1103 (JP); YANO, Kazuyoshi, Setagaya-ku, Tokyo 155-0031 (JP); KARUBE, Isao, Yokohama-shi, Kanagawa 225-0002 (JP); TSAI, Shuo-Wen, Tsuchiura-shi, Ibaraki 300-0875 (JP); YOKOYAMA, Kenji, Tsukuba-shi, Ibaraki 305-8562 (JP); KOIDE, Satoshi, Tsukuba-shi, Ibaraki 305-8562 (JP); AKIMOTO, Takuo, Tsukuba-shi, Ibaraki 305-8562 (JP)
(74) Representative: Grünecker, Kinkeldey, Stockmair & Schwanhäusser Anwaltssozietät
(86) International application number: PCT/JP2003/011352
(87) International publication number: WO 2004/031757

(57) **Abstract**

An objective of the present invention is to provide electrophoretic separation methods and devices that enable the various features of a substrate surface that comes in contact with an electrophoresis medium to be controlled.

The present invention provides methods for electrophoresing substances, which comprises the steps of:
(a) adding a substance to be analyzed to an electrophoresis medium retained in a substrate, whose surface that has come in contact with the electrophoresis medium has been coated with a polymer membrane; and
(b) adding electrophoretic pressure to the electrophoresis medium.

For example, the use of a plasma-polymerized membrane allows the formation of a membrane with homogeneous quality and thickness on the surface of an arbitrary shape. In addition, desired characteristics can be conferred on the surface through selection of monomeric substances. Protein adsorption onto micro-chips can be effectively prevented as well.

## Description

### Technical Field

The present invention relates to methods for separating substances.

### Background Art

To be able to thoroughly analyze proteins expressed in diseased tissues quickly and easily is important in the fields of new diagnostic methods and drug discovery. Analyses of proteins expressed in diseased tissues comprise separating individual proteins from a sample containing a variety of proteins, and comparing the expression level of each protein with the normal tissues. A key technology is separating individual proteins from a sample containing a plurality of proteins.

Conventional methods of separating proteins include electrophoretic methods, such as isoelectric focusing, polyacrylamide gel electrophoresis, capillary electrophoresis, and two-dimensional electrophoresis combining these electrophoretic methods, and chromatography.

Studies on separation of components in a sample using electrophoresis include for example, early techniques of flushing a sample through a glass tube packed with agar gels to separate the components, and protein separation experiments in which samples are separated in zones (Non-patent document 1). Various electrophoretic methods have emerged throughout the long history of electrophoresis. Furthermore, a method of electrophoresis in free solutions using exceedingly thin capillaries (CE) was also developed (Non-patent document 2).

However, of the methods described above, the gel electrophoresis method has the disadvantages of laborious gel handling and poor reproducibility. In particular, electrophoretic separation methods combining isoelectric focusing and gel electrophoresis are highly complicated.

The CE method ensures not only exceptionally high resolutions but also highly reproducible detection and quantitation. CE is an on-capillary detection, and moreover, detection performed in free solutions gives a uniform background absorbance. Thus, the detection reproducibility is exceedingly high compared to conventional electrophoretic methods, thus making highly reliable quantitation possible.

Up until now, two-dimensional electrophoresis using slab gels has been widely used with a reasonably high performance. However, it is technically difficult to prepare and apply the same two-dimensional structure to the current CE method which uses thin capillaries.

Combinations of various separatory and analytical techniques are necessary for separation and detection of a wide variety of proteins, and large amounts of a protein sample are often needed. However, in some cases where only a trace amount of a protein sample is available, detecting a large variety of proteins may be difficult. With the chromatographic and gel-electrophoretic methods described above, miniaturization is difficult and certain limitations exist for the analysis of trace amounts of protein.

On the other hand, developing high sensitivity detection methods and micro devices is needed for detecting trace amounts of protein. However, in reality it is quite difficult to produce sub-millimeter sized devices by conventional production methods based on manual operation. Devices assembled this way vary in performance from item to item. In other words, the yield can be low since the performance varies considerably.

Electrophoresis is an important separation technique for not only proteins but also other components such as nucleic acids. The amount of sample and the time required for separation analysis of proteins as well as nucleic acids can be reduced when micro devices become available.

The micro machining and semiconductor processing technologies may be required to develop devices for separating trace amounts of sample with high resolution. The micro machining technology is used to produce channels and structures that regulate the liquid flow in such channels on a micro chip, or to construct a system that regulates the temperature conditions inside the channels (Non-patent documents 3, 4, and 5). Moreover, the semiconductor processing technology is used to produce micro structures on substrate surfaces by photolithography or etching (Non-patent documents 6 and 7).

Among substrates used for manufacturing devices by the technologies described above, glass is one of the most popular materials. In glass capillary electrophoresis, the inner wall of a glass capillary in contact with the solution is negatively charged, resulting in an electroosmotic flow from anode to cathode. Under such conditions, only uni-directional zone electrophoresis is possible. Consequently, if the sample contains cationic components, the traveling time required for cations is greatly reduced, making it difficult to separate the cationic components. Therefore, devices produced using glass substrates are expected to have the same problems as those indicated for the glass capillary.

On the other hand, neutral components have no charge and therefore cannot be separated by uni-directional zone electrophoresis. The isoelectric focusing method is suitable for separating neutral proteins. The inner wall of a capillary needs to be modified for capillary isoelectric focusing. However, there is no established modification method that can be easily performed and gives good modified surface.

The electrophoresis conditions can thus be adjusted as needed depending on the purpose, if the electrostatic charge on the glass surface can be controlled.

For example, by coating the inner wall surface of a separation column using materials with reduced absolute zeta potential values, the electroosmotic flow generated inside the separation column was delayed, thereby improving the separation efficiency (Patent document 1).

Alternatively, the inner wall of a capillary was adsorbed with a polymer to prevent the generation of an electroosmotic flow inside the capillary and such (Patent documents 2, 3, and 4).

However, there has been no conventional electrophoretic method that uses separatory and analytical substrates having surfaces that come in contact with an electrophoretic medium and whose properties such as electrostatic charge and hydrophobicity can be commonly controlled.

The various attempts described above coat the inside of a capillary by running an electrophoretic medium through it, therefore desired areas of the capillary cannot be coated with functional groups having desired properties in advance. Furthermore, such polymer coating methods are prone to defects such as formation of pinholes. Another problem is the difficulty in controlling membrane quality and thickness.

In these methods, a polymer is coated onto the inner wall of a capillary by adsorption or via covalent linkage to modify the surface of a glass substrate. A specific example of such modification methods comprises neutralizing a glass surface by chemical modification using acrylamide via silane coupling. However, the hydrophilic group of the introduced silane-coupling agent is unstable, and therefore this method is likely to encounter a problem of gradual abrasion of the modified surface in a neutral to alkaline solution.
[Non-patent document 1] Journal of Biology and Chemistry (T. B. Coolidge, J. Biol. Chem.), 127: 551, 1939
[Non-patent document 2] Journal of Chromatography (F. E. P. Mikkers, F. M. Everaerts, Th. P. E. M. Veerheggen, J. Chromatogr.), 169: 11, 1979
[Non-patent document 3] M. Esashi, Micro Machine, OYO BUTURI, 60, 1991
[Non-patent document 4] Nature Biotechnology (P. N. Gilles, D. J. Wu, C. B. Foster, P. L. Dillon, S. J. Chanock, Nature Biotec.), 17, April, 1999
[Non-patent document 5] GeneChip systems, Affymetrix Inc. 3380 Central Expressway Santa Clara, CA 95051
[Non-patent document 6] Micro-mechanics (A. Heuberger (ed.), Micro-mechanics), Springer-Verlag, Berlin, 1989
[Non-patent document 7] S. Furukawa, and T. Asano, Introduction to Super Minute Patterning, Ohmsha, Ltd., 1989
[Patent document 1] Unexamined Published Japanese Patent Application No. (JP-A) 2001-41929
[Patent document 2] Published Japanese Translation of International Publication No. Hei 5-503989
[Patent document 3] Published Japanese Translation of International Publication No. Hei 7-506432
[Patent document 4] Published Japanese Translation of International Publication No. Hei 9-504375

Thus, an objective of the present invention is to provide separation methods and devices that are capable of regulating various properties of a substrate surface that comes in contact with a separation medium.

### Disclosure of the Invention

The present inventors conducted extensive studies to achieve the objective described above, and revealed that a substrate surface that comes in contact with a separation medium can be freely regulated using various parameters of the substrate surface, for example, electric potential, and hydrophilicity or hydrophobicity. This is achieved by coating a substrate surface with polymers having various properties through plasma polymerization, chemical polymerization, or chemical modification. The inventors also found that plasma polymerization, surface polymerization, and immobilization of polymer compounds are useful technologies in modifying the surface of a substrate that comes in contact with a separation medium, and thus completed the present invention.

Of the polymerization methods listed above, plasma polymerization gives highly homogeneous polymer membranes with reduced pinhole formation. Such plasma-polymerized membranes can be formed onto any shape of substrate surface. Monomers can be selected to readily form membranes of various properties. Furthermore, homogeneous membranes can be formed onto many substrate surfaces at a time. This enables mass production of devices while maintaining uniform quality.

Surface polymerization in which monomers are polymerized on a substrate surface enables desired polymer membranes to be formed on desired areas of a substrate surface with reduced membrane abrasion.

In addition, polymer immobilization that binds polymers onto a substrate surface enables membrane thickness to be conveniently regulated and desired polymer membranes to be formed on desired areas of the substrate surface.

Specifically, the present invention provides methods for convenient separation and analysis of a large number of samples at a time on miniaturized substrates, and relates to the following separation methods, devices to be used in such methods, and methods for producing such devices.

The methods of separating substances according to the present invention comprise the steps of:
(a) adding a substance to be analyzed to the separation medium retained in a substrate, wherein the surface of the substrate that comes in contact with the medium has been coated with a polymer membrane; and
(b) applying separation pressure to the separation medium.

The polymer membrane described above is preferably a plasma-polymerized membrane obtained by plasma polymerization.

The plasma-polymerized membrane described above is preferably formed by plasma polymerization using a monomer selected from the group consisting of hexadiene, hexamethyldisiloxane, acetonitrile, hexylamine, and aminoacetaldehyde dimethylacetal.

The polymer membrane described above is preferably a surface-polymerized membrane obtained by polymerizing polymerizable monomers on the surface of the substrate described above.

Preferably, the surface-polymerized membrane described above is immobilized onto a substrate surface via hydrophobic spacers, and covalently linked to the hydrophobic spacers with carbon-carbon single bonds.

The hydrophobic spacer described above is preferably an alkyl group of 2 to 6 carbon atoms.

The polymer membrane described above is preferably a polymer-bound membrane obtained by binding polymer compounds onto the surface of a substrate described above.

The polymer-bound membrane described above is preferably formed by covalently bonding a substrate with any polymer compound selected from the group consisting of polystyrene, polyallylbenzene, polyvinyl alcohol, polyacrylamide, polyvinyl sulfonate, polyacrylic acid, polydiallyl dimethylammonium salt, polyallylamine, and polyethylene glycol.

The substrate described above is preferably a planar basal plate.

The substrate described above is preferably made of glass.

The principle of separation described above is preferably electrophoresis.

The principle of electrophoresis is preferably isoelectric focusing.

The above-described substance to be separated is preferably a protein.

The method of producing a separatory and analytical substrate according to the present invention comprises the step of forming a plasma-polymerized membrane on a substrate surface by plasma polymerization.

The plasma-polymerized membrane on the substrate surface described above is preferably formed by plasma polymerization of a monomer selected from the group consisting of hexadiene, hexamethyldisiloxane, acetonitrile, hexylamine, and aminoacetaldehyde dimethylacetal.

The method of producing a separatory and analytical substrate according to the present invention comprises the step of forming a surface-polymerized membrane by polymerizing polymerizable monomers on a substrate surface.

Preferably, the substrate surface described above has a hydrophobic functional group containing a terminal double bond, and the hydrophobic functional group is polymerized with a polymerizable monomer.

The hydrophobic functional group described above is preferably an alkenyl group comprising 2 to 6 carbon atoms with terminal double bonds.

The method of producing a separatory and analytical substrate according to the present invention comprises the step of forming a polymer-bound membrane by binding a polymer compound onto the substrate surface.

The polymer-bound membrane is preferably formed by covalently bonding the substrate with any polymer compound selected from the group consisting of polystyrene, polyallylbenzene, polyvinyl alcohol, polyacrylamide, polyvinyl sulfonate, polyacrylic acid, polydiallyl dimethylammonium salt, polyallylamine, and polyethylene glycol.

The substrate described above is preferably a planar basal plate.

The substrate described above is preferably made of glass.

The method of modifying the surface of a separatory and analytical substrate according to the present invention comprises the step of forming a plasma-polymerized membrane on a substrate surface.

The method of modifying the surface of a separatory and analytical substrate according to the present invention comprises the step of forming a surface-polymerized membrane by polymerizing monomers on a substrate surface.

The method of modifying the surface of a separatory and analytical substrate according to the present invention comprises the step of forming a polymer-bound membrane by binding a polymer compound to a substrate surface.

The separatory and analytical substrate of the present invention has a surface that comes in contact with a separation medium coated with a polymer membrane.

The polymer membrane described above is preferably a plasma-polymerized membrane obtained by plasma polymerization.

The polymer membrane described above is preferably a surface-polymerized membrane obtained by polymerizing monomers on a substrate surface described above.

The polymer membrane described above is preferably a polymer-bound membrane obtained by immobilizing a polymer compound onto a substrate surface described above.

The apparatus for electrophoretic analysis according to the present invention comprises the following components:
(a) a substrate used to retain an electrophoretic medium, in which the substrate surface comes in contact with the medium has been coated with a polymer membrane; and
(b) electrodes used to apply voltages to the electrophoretic medium retained in the substrate.

### Brief Description of the Drawings

Fig. 1 is a schematic diagram showing the structure of a capillary electrophoresis chip used in Examples.
Fig. 2 is a series of photographs showing the time course of protein spot movements in electrophoresis performed with samples containing 33 µg/µl protein at 1000 V using acetonitrile-modified capillaries. Spots from the anode (i.e., from the right) correspond to phycocyanin, hemoglobin, and cytochrome c, respectively.
Fig. 3 is a series of photographs showing electrophoretic concentration of proteins using a chip having capillaries whose inner walls are unmodified (a) or chemically modified with acrylamide (b).
Fig. 4 is a series of photographs showing electrophoretic concentration of proteins using an electrophoresis chip having capillaries whose inner walls are coated with acetonitrile (c), hexadiene (d), or HMDS (e).
Fig. 5 is a histogram showing electrophoresis time at the applied voltages of 1000V and 2000V. The vertical axis indicates electrophoresis time, and the horizontal axis indicates substances used in modification.
Fig. 6 is a diagram showing the principle of capillary isoelectric focusing (CIEF).
Fig. 7 is a diagram showing the principle of capillary zone electrophoresis (CZE).

### Best Mode for Carrying out the Invention

### Separation method

The present invention relates to a method of analyzing substances, comprising the steps of:
(a) adding a substance to be analyzed to a separation medium retained in a substrate, in which the surface of the substrate that comes in contact with the medium has been coated with a polymer membrane; and
(b) applying separation pressure to the separation medium.

The principle of separation described above includes electrophoresis and separation under pressure. Of these, electrophoresis is used preferably.

The separation medium includes but is not limited to conventional electrophoresis media. The separation medium includes, for example, organic solvents, gels such as polyacrylamide and agarose, and liquids such as buffer. A preferred separation medium is an electrophoretic medium. Preferred electrophoretic media include, for example, gels and buffers. There is no limitation as to the type of separation medium to be used in separation under pressure.

The separation driving force includes pressure and voltage. Electrophoresis uses voltage.

Herein, the term "substrate" refers to a support whose shape is suitable for retaining a separation medium. Specifically, the support may be tubular-shaped, groove-shaped, or tabular-shaped.

Of the three, the tabular-shaped support can be preferably used in the present invention. Such a tabular support may be a planar basal plate.

The use of a planar substrate allows two-dimensional separation. In addition, various types of polymer membranes can be readily formed on a single planar substrate. For example, substrates coated with various types of polymer membranes on desired areas can be obtained by coating a substrate with a masking agent to immobilize a desired polymer membrane onto desired areas via plasma polymerization, surface polymerization, or immobilization of polymer compounds.

Tabular-shaped substrates can also retain, for example, liquid or gelatinous electrophoretic media. For example, liquid can be retained in a narrow space between two plates via capillary action.

There are no limitations on the planar shape for such supports. Specifically, the support can be linear, disc-shaped, circular, polygonal, or curved in shape.

There are no limitations on the material that constitutes the support. In the present invention, the surface in contact with a separation medium is modified using a plasma-polymerized membrane, a surface-polymerized membrane, or a polymer-bound membrane. Therefore, the support material itself has no direct influence on the results of separation such as electrophoresis. Thus, it is possible to select any material, for example, that meets the following minimum requirements:
- have tolerance to heat generated by migration such as electrophoresis
- have a certain degree of mechanical strength
- be an insulator.

In general, a transparent material is used as a substrate. Transparent materials allow optical observation from the outside. Specifically, for example, supports made of glass or plastics can be used as a substrate.

For example, when a glass plate is used as the substrate, it may or may not have grooves, however, it is preferred that the substrate has no grooves.

When the substrate has no grooves, continuous two-dimensional separation can be readily performed by applying separation pressure in one direction and then in another direction.

On the other hand, when the substrate has grooves, it is difficult to achieve continuous two-dimensional separation. However, such a substrate can easily retain a separation medium such as electrophoretic medium. For example, the width of a groove retaining an electrophoretic medium may be as narrow as 1 to 100 µm. The cross-sectional surface of the groove may be polygonal, such as triangular and rectangular, U-shaped or semicircular. Such microstructural grooves can be set up on a support such as glass by the following procedures:
- wet etching method of the semiconductor processing technologies (method using hydrofluoric acid)
- dry etching method of the semiconductor processing technologies (ion sputtering, reactive-ion etching (ICP etching and others))
- laser drilling
- dicing saw

Microstructures with various shapes can be readily produced by wet etching, dry etching, or laser drilling. For example, grooves with width and depth of 10 to 100 µm can be produced on a glass surface by known technologies. For example, the present inventors succeeded in producing micro-channels using reactive-ion etching. Etching with high selectivity or high etch rate can be achieved by using different types of etching gases depending on the substrate material.

The grooves formed on a substrate surface may be an open or closed type. To produce closed-type grooves, another tabular-shaped substrate may be superimposed on the substrate where grooves have formed. The substrate where grooves are formed and the second substrate to be superimposed on this substrate may be made of the same or different materials. Furthermore, holes can be made at positions that overlap with the second substrate grooves and supply samples and separation media to the grooves as connection channels . Alternatively, holes made in the second substrate can be used as reservoirs to hold samples or buffers.

In the present invention, a glass capillary can be used as a substrate. Within glass capillaries, capillary columns containing gels or buffers are commonly used as a means to retain electrophoretic media for DNA or protein.

The present invention uses substrates whose surfaces have been coated with plasma-polymerized membranes, surface-polymerized membranes, or polymer-bound membranes. In the present invention, at least the part of the substrate surface that has come in contact with a separation medium is coated with a plasma-polymerized membrane, a surface-polymerized membrane, or a polymer-bound membrane.

Plasma polymerization enables the formation of plasma-polymerized membranes on micro-groove surfaces and narrow capillary inner surfaces. In addition, plasma polymerization gives highly homogeneous membranes. This polymerization method is effective in preventing the generation of pinholes on substrate surfaces, and enables the production of highly reliable substrates for separation analyses.

Surface polymerization enables a desired surface-polymerized membrane to be formed on desired areas of a substrate surface with reduced membrane abrasion.

Furthermore, polymer-bound membranes consisted of polymer compounds bound to a substrate surface enable the formation of a desired polymer membrane on desired areas of the substrate surface while controlling the membrane thickness.

Substrates that have been coated with plasma-polymerized membranes, surface-polymerized membranes, or polymer-bound membranes as such can be prepared by conventional methods. The respective membrane types are illustrated below.

### Plasma-polymerized membranes

Specifically, plasma polymerization is a method of forming a membrane directly on the surface of a support by polymerizing monomeric compounds using plasma excitation in vacuum. Plasma-polymerized membranes having various properties can be produced by using different types of monomeric compounds. In principle, any types of monomers can be used with success in plasma polymerization. Generally, formation of polymers requires cleavage of double bonds. However, polymerization reactions take place through many active molecular species as monomeric substances become fragmented in plasma.

Any types of monomers may be used to form plasma-polymerized membranes of the present invention, as long as they are capable of forming polymer membranes that confer suitable characteristics on a support surface for separations such as electrophoretic separations. For example, characteristics suitable for electrophoretic separations include the following properties. Monomeric compounds that confer any one of the characteristics described below can be used in the present invention.
- inhibit the substrate adsorption of substances to be separated
- have affinity for substances to be separated

For example, glass, which is used for capillary electrophoresis, tends to have proteins adsorbed on its surface. The substrate adsorption of proteins can be controlled by using plasma-polymerized membranes. For example, it can be controlled by altering the substrate hydrophobicity or surface charge.

Monomers conferring plasma-polymerized membranes that satisfy these conditions include the following substances ("Plasma polymerization", ed. Yoshihito Nagata, written by Mitsuo Kakuta, Kaoru Nakajima, Masataka Miyamura, Shinzo Morita, et al., Tokyo Kagaku Dozin, 1986).

Alkanes or cycloalkanes include the following compounds:
methane, ethane, propane, butane, isobutane, pentane, isopentane, neopentane, hexane, isohexane, 3-methylpentane, 2,2-dimethylbutane, 2,3-dimethylbutane, heptane, 2,2,3-trimethylbutane, octane, nonane, decane, methane-d1, methane-d2, methane-d3, methane-d4, cyclopropane, cyclobutane, cyclopentane, cyclohexane, methylcyclohexane, cyclooctane, cis-decalin, and trans-decalin.

Alkenes, alkynes, or cycloalkynes include the following compounds:
ethylene, propylene, 1-butene, (Z)-2-butene, (E)-2-butene, 2-methylpropene, 1-pentene, 2-methyl-1-butene, 3-methyl-1-butene, 2-methyl-2-butene, 1-hexene, (E)-2-hexene, (E)-3-hexene, 3-methyl-1-pentene, 2,3-dimethyl-2-butene, 1-heptene, 1-octene, (E)-2-octene, 1-decene, 1,3-butadiene, (Z)-1,3-pentadiene, (E)-1,3-pentadiene, isoprene, 2,3-dimethyl-1,3-butadiene, hexadiene, acetylene, propyne, 1-butyne, 2-butyne, 1-pentyne, 3-methyl-1-butyne, vinylacetylene, cyclopropene, cyclobutene, cyclopentene, cyclohexene, cycloheptene, cyclopentadiene, 1,3-cycloheptadiene, and cyclooctatetraene.

Alcohols, aldehydes, ketones, carboxylic acids, or esters include the following compounds:
methanol, ethanol, 1-propanol, 2-propanol, 1-butanol, 2-butanol, 2-methyl-1-propanol, 2-methyl-2-propanol, allyl alcohol, 1,3-butanediol, 2,3-butanediol, 2,3-epoxy-1-propanol, formaldehyde, acetaldehyde, propionaldehyde, butylaldehyde, valeraldehyde, isovaleraldehyde, acrylaldehyde, crotonaldehyde, glyoxal, acetone, 2-butanone, 2-pentanone, 3-methyl-2-butanone, 3-pentanone, 2-hexanone, 4-methyl-2-pentanone, 2-heptanone, cyclobutanone, cyclopentanone, cyclohexanone, cycloheptanone, cyclooctanone, 4-methyl-3-penten-2-one, 2,3-butandione, formic acid, acetic acid, propionic acid, butyric acid, isobutyric acid, acrylic acid, methyl formate, ethyl formate, propyl formate, butyl formate, isobutyl formate, methyl acetate, ethyl acetate, propyl acetate, isopropyl acetate, butyl acetate, isobutyl acetate, s-butyl acetate, methyl propionate, methyl butyrate, vinyl acetate, and allyl acetate.

Ethers, amines and other compounds usable as monomer substances include the following:
dimethyl ether, diethyl ether, dipropyl ether, diisopropyl ether, dibutyl ether, ethylene oxide, 1,3-dioxolane, 1,3-dioxane, 1,4-dioxane, methyl vinyl ether, methylamine, ethylamine, propylamine, isopropylamine, butylamine, isobutylamine, s-butylamine, t-butylamine, pentylamine, hexylamine, dimethylamine, trimethylamine, diethylamine, triethylamine, dipropylamine, diisopropylamine, tripropylamine, dibutylamine, allylamine, formamide, acetamide, N-methylacetamide, N,N-dimethylformamide, N,N-dimethylacetamide, methanethiol, ethanethiol, dimethyl sulfide, diethyl sulfide, dipropyl sulfide, dimethyl disulfide, diethyl disulfide, methanedithiol, 1,2-ethanedithiol, nitromethane, nitroethane, 1-nitropropane, 2-nitropropane, 1-nitrobutane, 2-nitrobutane, acetonitrile, propionitrile, acrylonitrile, aminoacetaldehyde dimethylacetal, and hexamethyldisiloxane.

Also, the following halides can be used as monomer substances:
fluoromethane, difluoromethane, fluoroform, tetrafluoromethane (carbon tetrafluoride), vinyl fluoride, 1,1-difluoroethylene, (Z)-1,2-difluoroethylene, (E)-1,2-difluoroethylene, trifluoroethylene, tetrafluoroethylene, 1,1,4,4-tetrafluorobutadiene, perfluorobutadiene, 2-fluoroethanol, trifluoroacetic acid, 1,1,1-trifluoro-2-propanone, perfluoroacetone, chloromethane, dichloromethane, chloroform, tetrachloromethane (carbon tetrachloride), chloroethane, 1,1-dichloroethane, 1,2-dichloroethane, 1-chloropropane, 2-chloropropane, 1,2-dichloropropane, 1,3-dichloropropane, 1-chlorobutane, 2-chlorobutane, 1-chloro-2-methylpropane, 2-chloro-2-methylpropane, chlorocyclopropane, 1,1-dichlorocyclopropane, vinyl chloride, 1,1-dichloroethylene, (Z)-1,2-dichloroethylene, (E)-1,2-dichloroethylene, trichloroethylene, tetrachloroethylene, 3-chloropropene, 1,3-dichloropropene, chloroacetylene, dichloroacetylene, 1-chloropropyne, 2-chloroethanol, chloroacetaldehyde, chloroacetonitrile, dichloroacetonitrile, trichloroacetonitrile, bromomethane, dibromomethane, bromoform, tetrabromomethane (carbon tetrabromide), bromoethane, 1,1-dibromoethane, 1,2-dibromoethane, 1-bromopropane, 2-bromopropane, 1,3-dibromopropane, 1-bromobutane, 2-bromobutane, 1-bromo-2-methylpropane, 2-bromo-2-methylpropane, 1,4-dibromobutane, 1-bromobicyclo[2.2.1]heptane, 1-bromobicyclo[2.2.2]octane, vinyl bromide, 3-bromopropene, 1,3-dibromopropene, bromoacetylene, dibromoacetylene, 1-bromopropyne, 2-bromoethanol, iodomethane, diiodomethane, iodoform, tetraiodomethane (carbon tetraiodide), iodoethane, 1-iodopropane, 2-iodopropane, 1-iodobutane, 2-iodobutane, 1-iodo-2-methylpropane, 2-iodo-2-methylpropane, 1-iodopentane, 3-iodopropene, iodoacetylene, diiodoacetylene, 2-iodoethanol, 1-bromo-2-chloroethane, 1,1,1-trifluoro-2-iodoethane, 2-chloro-1,1-difluoroethylene, 1-chloro-1,2,2-trifluoroethylene, 1,1-dichloro-2,2-difluoroethylene, 1-bromo-2-chloroacetylene, 1-chloro-2-iodoacetylene, and 1-bromo-2-iodoacetylene.

Further, the following aromatic hydrocarbons can be used as monomer substances:
benzene, toluene, ethylbenzene, propylbenzene, cumene, butylbenzene, s-butylbenzene, t-butylbenzene, o-xylene, m-xylene, p-xylene, o-diethylbenzene, m-diethylbenzene, p-diethylbenzene, mesitylene, 1,2,4,5-tetramethylbenzene, styrene, phenylacetylene, (E)-1-propenylbenzene, (E)-1-phenylbutadiene, 2-phenylbutadiene, biphenyl, naphthalene, 1-methylnaphthalene, 2-methylnaphthalene, anthracene, phenanthrene, pyrene, naphthacene, chrysene, and pentacene.

In addition, the following benzene derivatives are useful as monomeric substances of the present invention:
phenol, benzaldehyde, acetophenone, anisole, benzylmethylether, aniline, benzylamine, thiophenol, benzonitrile, fluorobenzene, chlorobenzene, bromobenzene, iodobenzene, o-dichlorobenzene, m-dichlorobenzene, p-dichlorobenzene, o-dibromobenzene, m-dibromobenzene, p-dibromobenzene, trifluorobenzene, hexafluorobenzene, o-fluorotoluene, m-fluorotoluene, p-fluorotoluene, o-chlorotoluene, p-chlorotoluene, o-bromotoluene, p-bromotoluene, o-iodotoluene, m-iodotoluene, p-iodotoluene, p-chlorofluorobenzene, and o-chloroiodobenzene.

Also, the following heterocyclic compounds can be used as monomeric substances:
pyridine, 2-methylpyridine, 3-methylpyridine, 4-methylpyridine, 2,6-dimethylpyridine, 2,5-dimethylpyridine, 2,4-dimethylpyridine, pyridazine, pyrimidine, pyrazine, 1,3,5-triazine, pyridine N-oxide, 2-methylpyridine N-oxide, 3-methylpyridine N-oxide, 4-methylpyridine N-oxide, 2,6-dimethylpyridine N-oxide, furan, methylfuran, tetrahydrofuran, pyrrole, pyrrolidine, thiophene, and 2-chlorothiophene.

In addition, troponoid compounds such as tropone and tropolone, and organic metal compounds such as tetramethylsilane, tetramethyltin, and tetramethyl lead, can also be used as monomeric substances.

Of those listed above, acetonitrile and hexadiene can be preferably used when the net charge of a substrate surface is nearly zero around neutral pH.

Hexamethyldisiloxane can be preferably used when the net charge of a substrate surface is negative around neutral pH.

Hexylamine and aminoacetaldehyde dimethylacetal can be preferably used when the net charge of a substrate surface is positive around neutral pH.

Conditions under which the plasma-polymerized membranes are formed using these monomer substances are known. Specifically, conditions such as flow velocity, electric discharge power, electric discharge time, and pressure are considered to be important as primary factors that affect the repeatability of plasma polymerization reactions. In plasma polymerization, optimal polymerization conditions must be established according to the apparatus and monomer. There is a report that if W/FM values (where W is the electric discharge power, F is the flow velocity, and M is the molecular weight of the monomer) are the same, the qualities of the membranes are similar (Yasuda, Plasma Polymerization, Academic Press, New York, 1985).

Considering the monomeric substance used and the thickness of the plasma-polymerized membrane ultimately needed, those skilled in the art routinely adjust these conditions appropriately. Also, some literatures show the effects of various parameters on the characteristics of plasma-polymerized membranes (Surface and Coatings Technology 82:1-15,1996, Polymer Engineering and Science 37/7:1188-1194, 1997). In order to fabricate plasma-polymerized membranes with hexamethyldisiloxane, which is an advantageous monomeric substance when immobilization of polynucleotides is intended as described below, optimal conditions within the following range may be selected to give plasma-polymerized membranes of approximately 0 - 240 Å:
Flow rate: 0 to 50 cm³/min
Discharge power: 0 to 300 W
Pressure: 10⁻⁶ to 10 Torr
Discharge time: 0 to 5 minutes
(Temperature: 0 to 100°C)

Alternatively, the following conditions are more preferable for the formation of plasma-polymerized membranes of approximately 0 - 240 Å:
Flow rate: 0 to 50 cm³/min
Discharge power: 20 to 100 W
Pressure: 0.05 to 0.6 Torr
Discharge time: 30 seconds to 5 minutes
(Temperature: room temperature)

Such plasma polymerization procedures confer various functional groups on substrate surfaces through selection of monomeric substances, and thus enable the convenient formation of membranes with various properties. For example, various substrates with different surface charge densities or hydrophobicities/hydrophilicities can be obtained.

For example, zeta potentials, which represent the charged state of a material, vary with pH and can be preferably controlled within the range of -100 to +100 mV.

In addition, for example, the contact angle of a surface can be controlled preferably within the range of 1 to 140°.

The membrane thickness of such a plasma-polymerized membrane is preferably within, for example, the range of 1 to 200 nm.

This polymerization method is quite effective in preventing the generation of pinholes, and thus plasma-polymerized membranes obtained this way are highly homogeneous.

Plasma polymerization enables the formation of plasma-polymerized membranes on substrate surfaces of arbitrary shapes.

The functional groups introduced can be used to have various interactions with proteins, enabling a variety of separation methods. For example, it is known that a plasma-polymerized membrane having amino groups on its surface can be synthesized, when a monomeric compound to be polymerized is an organic substance having nitrogen atoms such as acetonitrile. Such plasma-polymerized membrane-coated surfaces enable electrostatic interactions between positively charged membranes and negatively charged proteins, and can be used for protein electrophoresis.

Alternatively, plasma-polymerized membranes having carboxyl groups on their surfaces can be synthesized when a carboxylic acid such as acetic acid or an organic substance such as ester is used as the monomeric substance. The use of such membranes enables electrophoretic separations or such based on interactions between negatively charged membrane and positively charged proteins.

Alternatively, plasma-polymerized membranes with highly hydrophobic surfaces enable separations based on hydrophobic interactions and are synthesized when alkane, cycloalkane, or aromatic hydrocarbon is used as a monomeric substance. Specifically, the three types of polymerization methods described above enable the creation of surfaces with effects comparable to those of anion exchange chromatography, cation exchange chromatography, and hydrophobic chromatography, respectively.

One of the technologies that enable mass production of various devices is the technology of simultaneous transfer of photo mask patterns using light (photoetching and Micro processing, K. Naraoka and K. Nihei, Sougou Shuppan, 1989). This technology is also referred to as "photo fabrication". With photo fabrication, devices such as very large scale integration (VLSI) chips which are assembled from millions of parts, can be constructed in one single piece on a silicon substrate of a few millimeters per side. Furthermore, combinations of multiple photo mask patterns can be used in photo fabrication. This feature makes it possible to integrate multiple different processes such as mounting and surface treatment. Thus, photo fabrication can also be used to produce separatory and analytical substrates such as those used in electrophoretic analyses.

It is important that the photo fabrication technologies used for surface modification and thin membrane formation be dry processes. The plasma polymerization method described above is a dry process, and thus can be used suitably in photo fabrication to produce devices. Furthermore, with plasma polymerization, thin membranes having functional groups on their surfaces can be obtained by selecting proper monomeric substances. In addition, plasma-polymerized membranes have highly cross-linked pinhole-free structures, and thus can be used suitably as thin membranes to modify the inside of channels.

### Surface-polymerized membrane

Surface-polymerized membranes are obtained by polymerizing monomers on the substrate surface described above.

Polymerization is preferably performed by copolymerizing monomers with the hydrophobic functional group having a terminal double bond on the substrate surface.

The hydrophobic functional group described above includes alkenyl groups with terminal double bonds, comprising preferably 2 to 6 carbon atoms, more preferably 3 to 6 carbon atoms, particularly preferably 4 to 6 carbon atoms.

Such hydrophobic functional groups include vinyl group, allyl group, 1-butenyl group, 1-pentenyl group, and 1-hexenyl group.

When monomers are copolymerized with such a hydrophobic functional group, the resulting surface-polymerized membrane is covalently linked through carbon-carbon single bonds with the hydrophobic functional group as a spacer.

Therefore, substrates bound with such a surface-polymerized membrane would have inhibited approach of water molecules to the hydrophobic spacer, and this prevents the release of the hydrophobic spacer itself due to hydrolysis caused by effects such as pH. In addition, the hydrophobic spacer and the surface-polymerized membrane are linked through carbon-carbon bonds, and thus the surface-polymerized membrane does not detach from the hydrophobic spacer at junction sites.

Thus, when a substance to be analyzed is a protein, the surface-polymerized membrane does not detach due to pH even when analyzed in an aqueous solvent. This ensures highly reliable analyses.

In the surface polymerization method, a surface polymer membrane is formed by polymerizing polymerizable monomers, and polymer aggregation is negligible compared to formation by binding polymers themselves. Thus, the surface polymerization method ensures a highly efficient polymer formation on substrate surfaces.

The hydrophobic functional group can be introduced onto a substrate surface by dissolving a compound which provides the above-described hydrophobic functional group having a terminal double bond in a solvent such as toluene, methanol or ethanol, and contacting the compound with a substrate such as glass. The reaction can be carried out at, for example, temperatures ranging from room temperature (about 25°C) to about 100°C for approximately 1 to 24 hours.

It is preferred that the above-described compound, from which a hydrophobic functional group having a terminal double bond is derived, have at one end a group that is reactive to silanol groups on glass surfaces. Such compounds include, for example, alkenylsilanes such as triethoxyvinylsilane, triethoxyallylsilane, triethoxybutenylsilane, triethoxypentenylsilane, and triethoxyhexylsilane.

Of the compounds listed above, triethoxyallylsilane, triethoxybutenylsilane, triethoxypentenylsilane, and triethoxyhexylsilane are more preferred, and triethoxybutenylsilane, triethoxypentenylsilane, and triethoxyhexylsilane are particularly preferred. These alkenyl silanes are commercially available or can be produced by conventional methods. For example, such a compound can be readily synthesized by reacting a Grignard's reagent or alkyl lithium compound containing the desired alkenyl group with halogenated silane such as chlorosilane or alkoxysilane in a solvent.

There is no limitation as to the type of polymerizable monomer described above, as long as it has a vinyl group, an allyl group, diene, or the like.

Such polymerizable monomers include nonionic monomers, anionic monomers, and cationic monomers.

Nonionic monomers used to produce nonionic (hydrophobic, hydrophilic, etc.) surfaces include, for example:
amides, such as acrylamide and methacryl amide;
esters, such as methyl acrylate, methyl methacrylate, vinyl acetate, allyl acetate, allyl acetoacetate, trimethyl vinyl acetate, vinyl formate, vinyl hexanoate, vinyl laurate, vinyl methacrylate, vinyl octanoate, vinyl palmitate, vinyl pivalate, vinyl propionate, vinyl stearate, mono-2-(methacryloyloxy)ethyl hexahydrophthalate, mono-2-(methacryloyloxy)ethyl phthalate, vinyl benzoate, p-vinyl benzoate, vinyl butyrate, vinyl caprate, vinyl caproate, vinyl crotonate, vinyl decanoate, vinyl cinnamate, allyl butyrate, allyl benzoate, allyl n-butyrate, allyl n-caprate, allyl n-caproate, allyl enanthate, allyl heptanoate, allyl isophthalate, allyl isothiocyanate, allyl isovalerate, and allyl n-valerate;
ketones, such as vinyl methyl ketone;
ethers, such as vinyl butyl ether, allyl ether, allyl ethyl ether, allyl butyl ether, vinyl ethyl ether, and allyl n-decanoate;
alcohols, such as vinyl alcohol and allyl alcohol;
halides, such as vinyl chloride, allyl chloride, methacryloyl chloride, vinyl chloroacetate, acryloyl chloride, allyl bromide, allyl iodide, allyl chloroacetate, allyl chloroformate, and allyl chloroformate;
aromatic compounds having a benzene ring, such as styrene, allyl benzene, 4-methacryloxy-2-hydroxybenzophenone, vinyl toluene, allyl benzyl ether, 4-allyl-2,6-dimethoxyphenol, allyl alisol, and 4-allyl-1,2-dimethoxybenzene;
silanes, such as 3-methacryloxypropyl trimethoxysilane, vinyl trichlorosilane, allyl chlorodimethyl silane, and allyl chloromethyl dimethyl silane;
cyanides, such as methacrylonitrile, vinyl acetonitrile, acrylonitrile, allyl cyanoacetate, and allyl cyanide;
cycloalkane derivatives, such as 2-allyl cyclohexanone, 1-allyl cyclohexanol, and allyl cyclopentane; and
vinyl anthracene, vinyl sulfone, allyl alcohol propoxylate, allyl-L-cysteine, allyl ethylene, allyl glycidyl ether, allyl trifluoroacetate, allyl cyclopentadienyl nickel, allyl diethyl phosphonoacetate, allyl diphenylphosphine, allyl diphenylphosphine oxide, and allyl disulfide.

Of the compounds listed above, acrylamide and vinyl alcohol can be preferably used for hydrophilic nonionic surfaces, and styrene and allyl benzene can be preferably used for hydrophobic nonionic surfaces.

Anionic monomers used to produce anionic surfaces include, for example, carboxyl group-containing compounds such as acrylic acid, methacrylic acid, mono-2-(acryloyloxy)ethyl succinate, and sulfonate group-containing compounds such as allyl sulfonate, vinyl sulfonate, 2-acrylamide-2-methyl propane sulfonate, 3-allyloxy-2-hydroxy-1-propane sulfonate, and p-vinyl benzene sulfonate.

Of the compounds listed above, vinyl sulfonate and allyl sulfonate can be preferably used as strong anionic compounds; acrylic acid and methacrylic acid can be preferably used as weak anionic compounds.

Cationic monomers used to produce cationic surface include, for example:
primary amines such as allylamine, 3-acrylamide-N,N-dimethylpropyl amine, allyl cyclohexylamine, and 3-methacrylamide-N-dimethylpropyl amine;
secondary amines such as methyl allylamine;
tertiary amines such as N-allyl diethylamine and N-allyl dimethylamine;
quaternary ammonium salts such as allyl triethyl ammonium, (3-acrylamide propyl) trimethyl ammonium chloride, vinyl trimethyl ammonium bromide, 3-(methacryloylamino) propyl trimethyl ammonium chloride, methacrylic acid ethyl trimethyl ammonium chloride, and diallyl dimethyl ammonium.

In addition to the nonionic monomers, anionic monomers, and cationic monomers listed above, compounds having heterocyclic ring groups in their side chains can also be used, which include, for example, allyl hydrazine, 2-vinyl pyrazine, 2-vinyl pyridine, 4-vinyl pyridine, N-vinyl-2-pyrrolidone, 1-allyl benzotriazole, and allyl-1-benzotriazole carbonate.

Of the compounds listed above, diallyl dimethyl ammonium salt or such can be preferably used as a strong cationic compound, and allylamine or such can be preferably used as a weak cationic compound.

Such polymerizable monomers may be used individually or in combination.

The polymerizable monomers listed above can be polymerized on a substrate surface by radical polymerization using conventional methods. For example, whether in the presence or absence of a solvent, a polymerization initiator may be added when necessary and polymerizable monomers can be polymerized on a substrate surface onto which polymerizable functional groups have been introduced.

There are no limitations on the solvent as long as it dissolves polymerizable monomers. For example, THF, methanol, DMF, or DMSO can be used.

Polymerization initiators include, for example, 2, 2'-azobis(isobutyronitrile) (AIBN), 1, 1'-azobis (cyclohexane-1-carbonitrile), and 2, 2'-azobis(2-methylbutyronitrile). In addition to these azo compounds, peroxide and organic metal compounds can also be used.

Polymerizable monomers that do not dissolve in solvents such as THF described above can be polymerized using, for example, ultrapure water as the solvent and polymerization initiators such as N,N,N',N'-tetramethyl ethylenediamine or 4,4'-azobis cyanovalerate.

There are no limitations on the polymerization conditions, which depend on the type of polymerizable monomer used. Typically, polymerization is carried out at, for example, temperatures ranging from room temperature to around 100°C for approximately 1 to 72 hours.

The surface-polymerized membranes obtained by this method can have surfaces that are hydrophobic/hydrophilic and that have various ranges of electric charges depending on the type of polymerizable monomers or combinations of polymers used.

For example, zeta potentials, which represent the charged state of a material, vary with pH and can be suitably controlled within the range of -100 to +100 mV.

In addition, for example, surface contact angles can be suitably controlled within the range of 1 to 140°.

Surface-polymerized membranes sometimes contain unmodified portions such as pinholes. Polymerizable monomers or polymers may be attached additionally.

Additional polymers or monomers may be reacted with the functional groups in the polymer side chains of the surface-polymerized membranes of the present invention.

Proteins can be separated by electrophoresis using various interactions between proteins and the introduced functional groups. For example, a surface-polymerized membrane having cationic functional groups on its surface can be synthesized using any one of the cationic monomers described above as the polymerizable monomer. Proteins can be separated by electrophoresis based on electrostatic interactions between negatively charged proteins and positively charged membranes by utilizing surfaces coated with such surface-polymerized membranes.

Alternatively, a surface-polymerized membrane having anionic functional groups on its surface can be synthesized using an anionic monomer as the polymerizable monomer. Such membranes enable electrophoretic separations based on interactions between negatively charged membranes and positively charged proteins.

Furthermore, highly hydrophobic or hydrophilic surface-polymerized membranes can be synthesized using properly selected nonionic polymerizable monomers. Such a membrane enables separations based on hydrophobic or hydrophilic interactions.

Specifically, the three types of membranes exemplified above enable the creation of surfaces having effects comparable to those of anion exchange chromatography, cation exchange chromatography, and hydrophobic/hydrophilic chromatography, respectively.

### Polymer-bound membranes

Polymer-bound membranes are produced by introducing functional groups onto a substrate surface and covalently linking polymers to the functional groups.

Functional groups that link with polymer compounds include amino group, epoxy group, carboxyl group, and aldehyde group. Of these groups, amino group and epoxy group can be preferably used.

Linkage groups comprising such functional groups are preferably linked onto a substrate surface via hydrophobic spacers.

Hydrophobic spacers contain an alkyl group comprising preferably 2 to 6 carbon atoms, more preferably 3 to 6 carbon atoms, particularly preferably 4 to 6 carbon atoms.

In substrates onto which polymer compounds have been immobilized, the approach of water molecules to functional groups comprising such hydrophobic spacers is limited due to the presence of hydrophobic spacers. This prevents the abrasion of polymer-bound membranes from hydrolysis due to effects such as pH.

The above-described functional groups with spacers can be introduced onto a substrate surface according to the type of substrate using, for example, the silane-coupling method when the substrate is made of glass, and the self-assembled monolayer method when the substrate is made of metal.

When the silane-coupling method is used, the functional groups can be introduced by, for example, contacting the substrate such as glass with an amino alkyl-type silane-coupling reagent such as aminopropyl triethoxysilane, aminobutyl triethoxysilane, aminopentyl triethoxysilane, aminohexyl triethoxysilane, or an epoxy alkyl-type silane-coupling reagent such as 3-glycidoxypropyl triethoxysilane, 3-glycidoxybutyl triethoxysilane, 3-glycidoxypentyl triethoxysilane, or 3-glycidoxyhexyl triethoxysilane, that has been dissolved in a solvent such as toluene, methanol, and water. These reagents are commercially available or can be produced by conventional methods. For example, the amino alkyl-type silane-coupling reagent or epoxy alkyl-type silane-coupling reagent can be readily synthesized by reacting a Grignard's reagent or an alkyl lithium compound containing the desired alkyl group and functional group with a halogenated silane such as chlorosilane or alkoxysilane in the presence of a solvent.

The reaction can be carried out at, for example, temperatures ranging from room temperature (about 25°C) to about 100°C for approximately 1 to 24 hours.

When the self-assembled monolayer method is used, a polymer-bound membrane can be formed by, for example, coating a substrate surface with a thin metallic membrane made of gold or the like by sputtering or such, introducing spacers having functional groups and thiol groups onto the surface of the thin metallic membrane, and then reacting polymers with the surface. Alternatively, a polymerization initiator may be reacted with the functional groups to polymerize monomers. Also, the polymer membrane may also be formed by modifying the metallic surface with thiol group-containing polymers prepared in advance.

The metal includes gold, silver, and copper. The spacer includes aminoethanethiol having an amino group and thioctic acid having a carboxyl group.

Spacers or thiol group-containing polymers can be introduced onto a substrate by dissolving spacers in media such DMSO or water, and contacting the spacers with the thin metallic membrane.

The reaction is carried out at, for example, temperatures ranging from room temperature to about 100°C for approximately 1 to 24 hours.

The above-described polymer includes polymers prepared in advance from polymerizable monomers used in the surface polymerization described above. Of such polymers, polystyrene, polyallylbenzene, polyvinyl alcohol, polyacrylamide, polyvinyl sulfonate, polyacrylic acid, polydiallyl dimethylammonium salt, polyallylamine, polyethylene glycol, or such can be used preferably.

Of the polymers listed above, polyvinyl alcohol and polyallyl alcohol can be preferably used for nonionic surfaces.

Polyacrylic acid can be used more preferably for powerful anionic surfaces.

Polyallylamine can be used more preferably for powerful cationic surfaces.

Such polymers may be used individually or in combination.

The average molecular weight of such a polymer is preferably within the range of, for example, 5000 to 500000, more preferably 10000 to 250000.

Polymer-bound membranes produced by immobilizing polymers onto a substrate sometimes contain unmodified portions such as pinholes, where the functional groups are not linked to the polymers. Polymers may be attached additionally.

There are no limitations on the method for producing such polymer-bound membranes. Any conventional methods can be employed for this purpose. For example, such membranes can be produced by dissolving an above-described polymer in a solvent and contacting the polymer solution with a substrate having an above-described surface onto which functional groups have been introduced.

There are no limitations on the solvent, as long as it dissolves polymers. Such solvents include, for example, DMSO (dimethyl sulfoxide) and HEPES (2-[4-(2-hydroxyethyl) 1-piperazinyl]ethane sulfonate) buffer.

In the binding reaction, activators can be used when necessary. For example, to link polyacrylic acid onto a substrate where amino groups have been introduced, polyacrylic acid is dissolved in HEPES, followed by addition ofN-hydroxy succinimide and 1-ethyl-3-(3-dimethylaminopropyl) carbodiimide hydrochloride.

The polymer-bound membranes prepared by the method described above sometimes have polymer-unreacted portions. In such cases, different polymers may be attached to the polymer-unreacted portions. In addition, different polymers or monomers may be reacted with the functional groups in the side chains of the bound polymers.

Polymer-bound membranes with surfaces that have various ranges of electrical charges and that are hydrophobic/hydrophilic can be obtained depending on the type of monomers or combinations of polymers.

For example, zeta potentials, which represent the charged state of a material, vary with pH and can be controlled preferably within the range of -100 to +100 mV.

In addition, for example, surface contact angles can be controlled preferably within the range of 1 to 140°.

In such polymer-bound membranes, membrane thickness can be readily controlled by adjusting the polymer to be immobilized in advance.

Proteins can be separated by electrophoresis or such utilizing various interactions between proteins and introduced functional groups. For example, polymer-bound membranes having cationic functional groups on their surfaces can be synthesized by using polymers derived from the above-described cationic monomers. Proteins can be separated by electrophoresis utilizing electrostatic interactions between negatively charged proteins and positively charged membranes by utilizing surfaces coated with such polymer-bound membranes.

Polymer-bound membranes having anionic functional groups on their surfaces can be synthesized using polymers derived from anionic monomers. Such membranes enable electrophoretic separations or such by utilizing amino group-equivalent electrostatic interactions between positively charged proteins and negatively charged membranes.

Highly hydrophobic or hydrophilic polymer-bound membranes can be synthesized using properly selected polymers derived from nonionic polymerizable monomers. Such membranes enable separations based on hydrophobic or hydrophilic interactions.

Alternatively, substrate surfaces having both anionic and hydrophobic (or hydrophilic) properties can be formed by linking polymers containing anionic functional groups onto a surface and then linking nonionic polymers or nonionic monomers having, for example, hydrophobic (or hydrophilic) functional groups, to the anionic functional groups. Furthermore, the degree of hydrophobicity (or hydrophilicity) can be controlled by adjusting the degree of modification with nonionic polymers or monomers.

### Separation method

In the present invention, there are no limitations on the separation pressure which varies with the separation medium used or such. Electrophoresis, pressure feed, or the like can be employed as the separation pressure.

There are no limitations on the separation principle of the electrophoretic methods described above. In electrophoretic separations that use the above-mentioned substrates with surface-coated polymer membranes, separation is made possible by using the various properties which depend on the type of separation medium used. Separation conditions in electrophoresis include pH gradient, molecular sieving, and interactions with the contacting functional groups in a separation medium. Isoelectric focusing involves electrophoresing proteins in a separation medium with a pH gradient. Molecular sieving electrophoresis under denaturing condition involves electrophoresing proteins in a medium such as polyacrylamide gel having molecular sieving effects, in the presence of a protein denaturant such as SDS, urea, or guanidine. It is called native gel electrophoresis when no denaturant is used.

Similarly, nucleic acids are fractionated in electrophoresis according to their lengths due to molecular sieving effects. Analytical methods such as PCR-SSCP have also been disclosed, in which the same nucleic acids are separated by electrophoresis under both non-denaturing and denaturing conditions, and then a comparison of the two electrophoretic patterns revealed differences in three-dimensional structure.

Furthermore, various types of separation media containing different functional groups are also available. Specifically, such media include substances with affinities as a result of electrostatic interaction, hydrogen bonding, or hydrophobic bonding, or any combination of these. Such substances with affinities include combinations of antigen-antibody, hybrids of nucleic acids comprising complementary nucleotide sequences, avidin-biotin, and sugar-lectin.

One of the electrophoresis principles suitable for the present invention is isoelectric focusing. Capillary isoelectric focusing (CIEF) according to the present invention can be carried out using an electroosmotic flow-free capillary, which can be prepared by treating (coating) the inner surface.

In the present invention, monomeric substances suitable for CIEF include, for example, hexadiene, hexamethyldisiloxane, acetonitrile, hexylamine, and aminoacetaldehyde dimethylacetal.

Monomeric substances suitable for surface-polymerized membranes include styrene, acrylamide, vinyl sulfonate, acrylic acid, diallyl dimethyl ammonium salt, and allylamine.

Monomeric substances suitable for polymer-bound membranes include polyvinyl alcohol, polyacrylic acid, and polyallylamine.

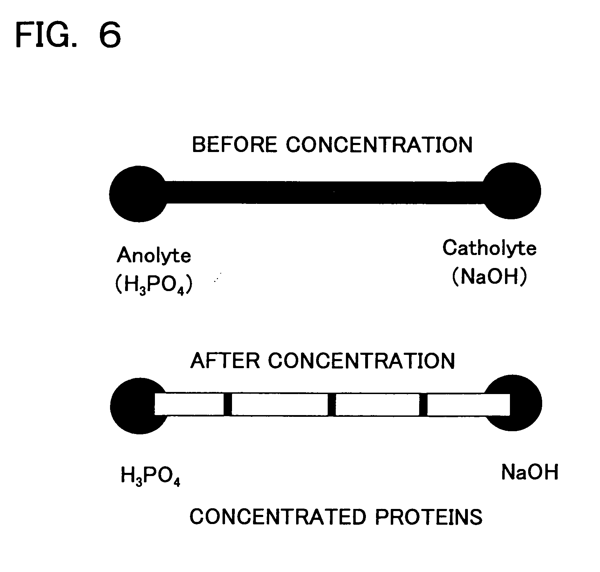

The following is an example of electrophoresis using a plasma-polymerized membrane. After an anolyte and a catholyte are loaded onto the respective ends, a voltage is applied to the two ends. The anolyte is an acidic solution which gives a pH lower than the pKa of the most acidic electrolytes in the solution. On the other hand, the catholyte is an alkaline solution which gives a pH higher than the pKa of the most basic electrolyte in the solution. The ampholytes move to respective positions of their isoelectric points and then stop there. Protein components are concentrated at positions corresponding to their isoelectric points along the pH gradient in the capillary and are observed as narrow zones (Fig. 6).

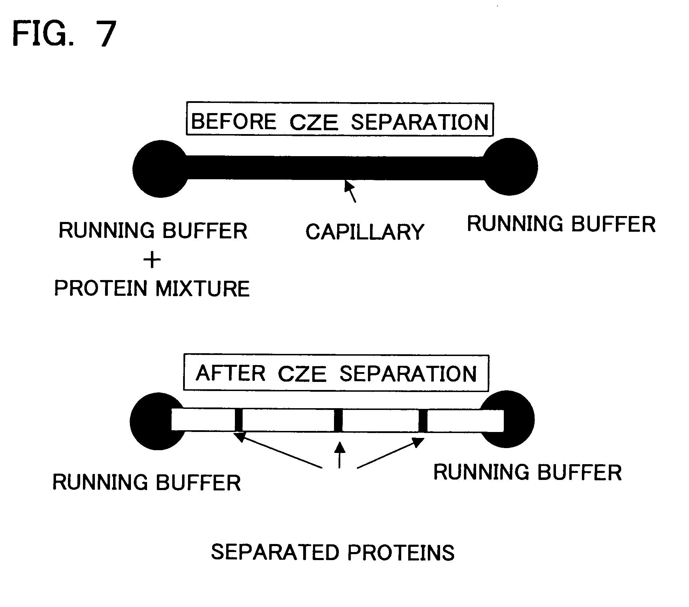

In capillary zone electrophoresis (CZE), when a solution containing a single electrolyte is introduced into a capillary, an electric double layer is formed between the inner wall of the capillary and the electrolyte solution in contact with the inner wall. Upon application of a voltage, electrolytes move together with the solvent causing an electroosmotic flow. The electroosmotic flow is a driving force that moves ionic components that have been separated. Components of a sample are attracted to either electrode by electrostatic force according to their net charges and sizes, and are separated as a result of the differential mobility due to differences in net charge and size (Fig. 7).

CIEF differs from CZE in that while an electrophoretic phenomenon is generated, generation of an electroosmotic flow should be minimized. In CIEF, modifications of capillary inner surface, capillary bore size, and composition of ampholytes in the running buffer have great influences on the electroosmotic phenomenon. Thus, the factors described above largely influence the CIEF separation efficiency.

### Method for producing separatory and analytical substrates

The present invention relates to a method of producing separatory and analytical substrates, wherein the method comprises the step of forming plasma-polymerized membranes on substrate surfaces. The method for coating a substrate with a plasma-polymerized membrane is described above. Substrates suitable for the separation method described above can be produced by coating a substrate surface that comes in contact with a separation medium with a plasma-polymerized membrane. A preferred separation method is electrophoresis.

The present invention also relates to a method of producing separatory and analytical substrates, wherein the method comprises the step of forming surface-polymerized membranes by polymerizing polymerizable monomers on substrate surfaces. The method for coating a substrate with a surface-polymerized membrane is described above. Substrates suitable for the separation method described above can be produced by coating a substrate surface that comes in contact with a separation medium with a surface-polymerized membrane. A preferred separation method is electrophoresis.

The present invention also relates to a method of producing separatory and analytical substrates, wherein the method comprises the step of forming polymer-bound membranes by immobilizing polymer compounds onto substrate surfaces. The method for coating a substrate with a polymer-bound membrane is described above. Substrates suitable for the separation method described above can be produced by coating a substrate surface that comes in contact with a separation medium with a polymer-bound membrane. A preferred separation method is electrophoresis.

### Method for modifying surfaces of separatory and analytical substrates

The present invention relates to a method of modifying surfaces of separatory and analytical substrates, wherein the method comprises the step of forming plasma-polymerized membranes on substrate surfaces. Plasma-polymerized membranes have advantageous features for surface modification. Specifically, with plasma polymerization, homogeneous membranes can be readily formed on any complicated surface structures. An intended property can be conferred on a substrate surface by appropriately selecting monomeric compounds. Thus, for example, if there is a possibility that a substrate surface may interfere with separation, such interferences can be prevented by coating the substrate surface with a plasma-polymerized membrane. Alternatively, it is possible to actively confer properties required for separation on a substrate surface according to the present invention. A preferred separation method is electrophoresis.

The present invention also relates to a method of modifying surfaces of separatory and analytical substrates, wherein the method comprises the step of forming surface-polymerized membranes by polymerizing polymerizable monomers on substrate surfaces. Surface-polymerized membranes have advantageous features for surface modification. It is possible to actively confer properties required for separation on a substrate surface according to the present invention. Surface-polymerized membranes can be formed on desired areas of a substrate surface without membrane abrasion. A preferred separation method is electrophoresis.

The present invention also relates to a method of modifying surfaces of separatory and analytical substrates, which comprises the step of forming polymer-bound membranes obtained by binding polymer compounds to substrate surfaces. Polymer-bound membranes prepared by this method have advantageous features for surface modification. Specifically, it is possible to actively confer properties required for separation on a substrate surface according to the present invention. In addition, while membrane thickness is controlled, polymer-bound membranes with a desirable performance can be formed on desired areas of a substrate surface. A preferred separation method is electrophoresis.

### Separatory and analytical substrate

The present invention also relates to separatory and analytical substrates, in which the substrate surfaces that come in contact with a separation medium have been coated with polymer membranes.

More specifically, such polymer membranes include plasma-polymerized membranes, surface-polymerized membranes prepared by polymerizing polymerizable monomers on substrate surfaces, and polymer-bound membranes prepared by binding polymer compounds to substrate surfaces. As described above, substrates having surfaces that come in contact with a separation medium coated with such a polymer membrane can be applied in separation methods according to the present invention. A preferred separation method is electrophoresis.

### Electrophoretic apparatus

The present invention also relates to an electrophoretic device comprising:
(a) a substrate to be used for retaining an electrophoretic medium, wherein the surface of the substrate that comes in contact with the medium has been coated with a polymer membrane, and
(b) electrodes to be used to apply voltages to the electrophoretic medium retained in the substrate.

Such polymer membranes include plasma-polymerized membranes, surface-polymerized membranes prepared by polymerizing polymerizable monomers on substrate surfaces, and polymer-bound membranes prepared by binding polymer compounds to substrate surfaces. As described above, electrophoretic devices that utilize substrates having surfaces that come in contact with a separation medium coated with such a polymer compound membrane can be used in electrophoretic methods according to the present invention.

The present patent application is based on a research project sponsored by the national government. The research project entitled "Development of technology for expressing functional proteins and analyzing interactions with proteins" (1999) is commissioned by The New Energy and Industrial Technology Development Organization under Article 30 of Law on Special Measures for Industrial Revitalization.

### Example

### 1. Devices and materials

### [Devices for plasma polymerization]

The plasma-polymerized membranes described in Examples were synthesized by the after-glow plasma polymerization method using a RF power generator and outer electrodes. A modified device was assembled by attaching various units to the plasma reactor model BP-1 from SAMCO, INC. so as to achieve automatic control of flow, pressure, and power matching. The components of the device are listed below:
Reaction chamber: Pyrex® 210 mmφ
Sample stage: a heater-controlling stage (SUS304) installed under the chamber
Exhaust system: turbo molecular pump (Pfeiffer) and rotary pump (Edwards)
RF power generator: crystal oscillator, 13.56 MHz, 300 W (SAMCO, INC.)
Matching: auto-matching system (SAMCO, INC.)
Pressure controller: automatic control of pressure from a baratron vacuum gauge (MKS Instruments) by using the valve unit of an automatic pressure controller (APC) (VAT)
Gas feed system: automatic control of sample monomers, argon, and oxygen line by using electromagnetic valves and mass flow controller (MFC) (STEC)

### [Dicing saw]

Capillary structures were made using an automatic dicing saw DAD321 from DISCO. This dicing saw is furnished with X and Y stages, and allows the production of straight capillaries without having to manually change the position of a glass substrate. In addition, the descending position and the velocity of the blade in the depth direction (Z direction) can be controlled freely, and this ensures the production of capillary structures with desired depths. X, Y, and Z directions are processed with an accuracy of micrometer order. The series of manipulations described above were all under the regulation of a computer program (recipe) in the built-in computer.

### [Surface profiler]

The surface profiler, DEKTAK3ST, from Veeco was used to measure the size of the capillary on the glass substrate. This device has the measuring distance and speed controlled by a computer, and the measurement results digitized. Data obtained using this device can be presented as section profile curves, roughness curves, waviness curves, or others on a computer display. Analyses of depth, height, angle, and others were performed using the built-in software programs when necessary. The final data were printed on a printer and also recorded onto a disk.

### [Capillary electrophoresis measurement system]

The system for electrophoretic experiments that utilize the prepared capillary electrophoresis chip comprises the high-voltage power supply BP-3 from BIOCRAFT or the power supply PS/FC40R03CTZ10 from Glassman Japan High Voltage Ltd. (Yokohama, Japan). With BP-3, voltages ranging from 0 to 1000 V can be applied to the capillary electrophoresis chips. Alternatively, PS/FC40R03CTZ10 gives a voltage up to 2000 V. The cool plate SA-800 from SANSYO was used as needed. The aluminum heating block of this plate can be cooled down to 4°C using the built-in Peltier device. Heat generated by voltage application to the capillary electrophoresis chip can be cooled down using this plate.

### [Experimental materials]

TEMPAX glass was used as the substrate. The silicon wafer used was from Shin-Etsu Chemical Co., Ltd. (type P, Miller index (100), 100 mm of diameter, 525 mm of thickness, 10 to 20 Ω·cm of resistance). Glass items were joined using Benefix PC, a UV light curing adhesive from Adel. Other reagents used were of EL grade, or of special or higher grade.

### 2. Experimental procedures

### [Preparation of capillary electrophoresis chips]

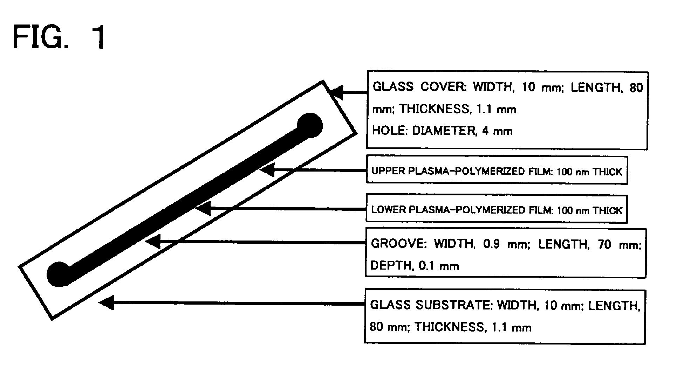

As shown in Fig. 1, the device used in the experiments has the structure of a glass substrate and a glass cover placed on top. Grooves were formed on the glass substrate using a dicing saw. In addition, the glass cover has thru holes. When the two glass items were superimposed, the thru holes served as reservoirs at both ends of the capillary. Furthermore, thin membranes with different characteristics have been formed on the surfaces of the upper glass cover and the bottom glass substrate. The glass cover and the glass substrate were superimposed with a photo-curable adhesive to form a capillary.

The size of the glass substrate of the glass cover is 80 mm (length) x 10 mm (width) x 1.1 mm (thickness). The size of the capillary is 70 mm (length) x 0.9 mm (width) x 100 µm (depth). The size of the thru holes in the upper glass cover is 4 mm (diameter) x 1.1 mm (depth).

The following shows the preparation procedure of the device.

A washed glass plate was prepared, and a dicing saw blade (DQAG0634, hard resin, diamond blade) of 300-µm thick was placed in the spindle of the dicing saw. Dicing was preformed at a speed as low as 2.0 mm/min. The surfaces of the respective glass plates were treated by the plasma polymerization method or chemical modification method described below. In the final step, the capillary structure was formed by gluing the glass cover with thru holes and the Pyrex® glass substrate with grooves together, filling the in-between gap with a photo-curable adhesive, and irradiating UV until the adhesive was cured completely.

### Comparison Example 1

### [Chemical modification of the inside of the capillary]

A silane-coupling solution (80 µL of [3-(methacrloyloxy)propyl]trimethoxysilane and 20 mL of H₂O) was adjusted to pH 3.5 with acetic acid. Then, the coupling solution was loaded into the capillary through a tube connected to the device. The solution was incubated at room temperature for 1 hour. After incubation, the capillary was washed with distilled water.

Then, a solution of 3% (w/v) acrylamide (a solution of 3-(trimethylsilyl)propyl methacrylate containing 1 µl of TEMED and 1 mg/mL potassium persulfate) was prepared and deaerated. Then, the acrylamide solution was loaded into the capillary through a tube connected to the device. The solution was incubated at room temperature for 30 minutes. After incubation, unreacted acrylamide was removed and the capillary was washed with distilled water. In the final step, the capillary was dried at 35°C and the capillary inner surface modification was completed.

### Example 1

### [Preparation of plasma-polymerized membranes]

In this Example, for modification of the capillary inner walls, a number of membranes with different net charges and hydrophobicities were made. The membranes were produced using monomers of hexadiene, hexamethyldisiloxane, and acetonitrile, and thus have different characteristics. The thickness of each membrane was 100 nm.

Substrates were placed in a chamber, and the chamber pressure was then reduced to 3 × 10⁻⁵ Torr. The chamber was filled with the monomeric compounds, and the pressure and the flow rate were adjusted to a desired level. Plasma-polymerized membranes were formed after a fixed period of discharging, and the substrates were removed from the chamber. The conditions used to prepare a plasma-polymerized membrane for each monomeric compound are shown in Table 1 together with the membrane quality and thickness.

**Table 1**

| Conditions | Monomeric substances | | |
|---|---|---|---|
| | 1,5-Hexadiene **(HDE)** | Hexamethyldisiloxane **(HMDS)** | Acetonitrile **(MeCN)** |
| Discharge power (W) | **150** | **150** | **150** |
| Pressure (mTorr) | **100** | **100** | **100** |
| Refractive index | **1.49** | **1.38** | **1.58** |
| Film quality | Hydrophobic | Hydrophobic | Hydrophilic |
| Thickness (nm) | **100** | **100** | **100** |

### 3. Results and discussion

### [Protein separation using prepared capillary electrophoresis chips]

Protein separation was carried out using the capillary electrophoresis chip and the inner wall modification method described above. The separation was performed using isoelectric focusing (CIEF). IEF marker proteins from Pharmacia were used as the sample. The sample contains three types of visible proteins, therefore electrophoretic bands can be confirmed by the naked eye. The isoelectric point and color for each protein is shown below.
phycocyanin (pI = 4.45); blue band
hemoglobin (pI = 7.0); reddish blown band
cytochrome c (pI =9.6); red band

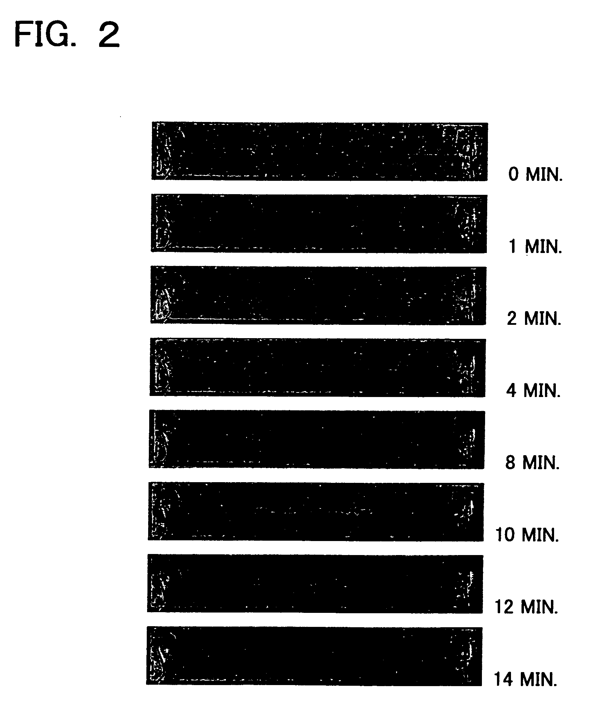

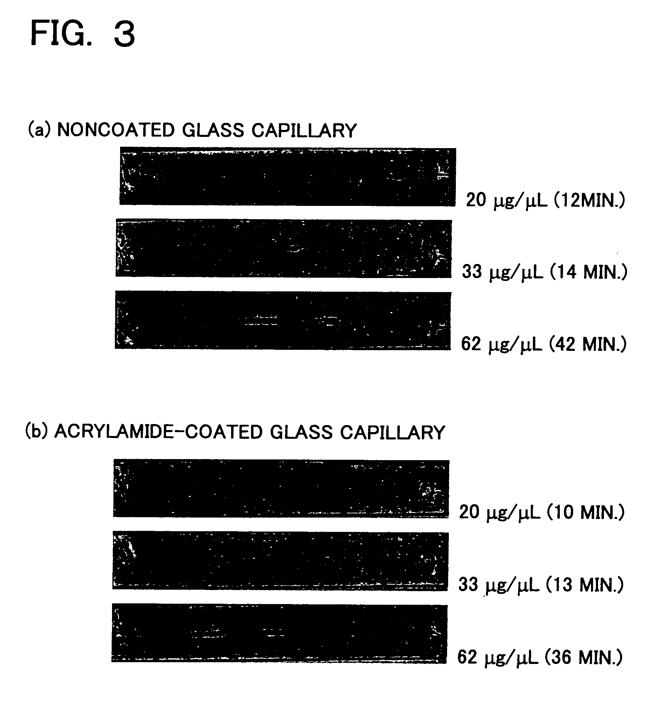

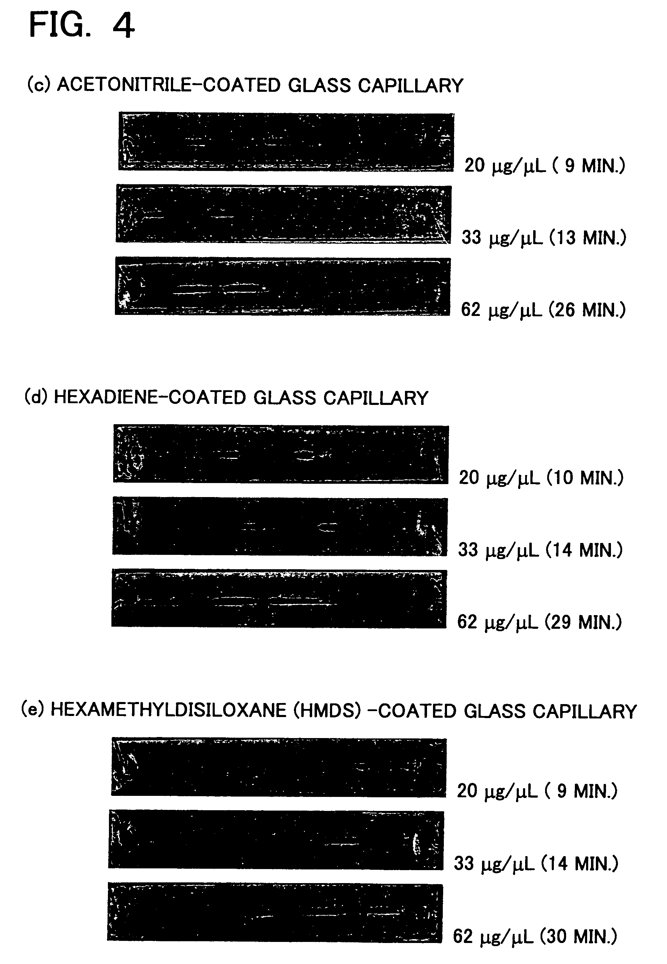

The experimental procedure used is as follows. First, the capillary was filled with a sample solution. As shown in Table 2, the protein concentrations in the samples used were 20, 33, and 62 µg/µl. Then, 25 µl of 0.1 M NaOH was injected into the cathode reservoir as the catholyte and 25 µl of 0.2 M H₃PO₄ was injected into the anode reservoir as the anolyte. To perform isoelectric focusing, a voltage was applied to the two ends of the capillary. Protein focusing during electrophoresis is shown in Figs. 2 to 4.

Then, the required time for electrophoresis was compared among the untreated capillary electrophoresis chips, those modified with acrylamide using the conventional method, and those modified by plasma polymerization according to the present invention. The applied voltage was 1000 or 2000 V.

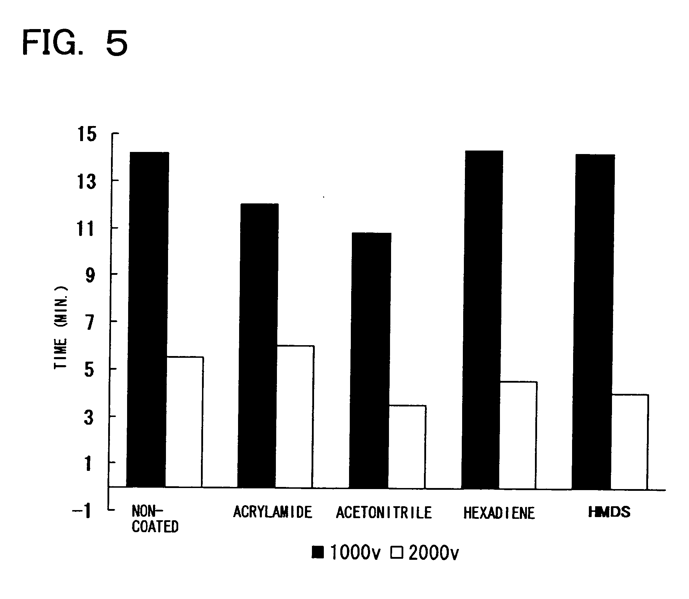

As shown in Fig. 5, the time required for electrophoresis was shortest with the acetonitrile-modified capillary among the five types of capillaries, at both voltages of 1000 V and 2000 V. For example, as shown in Fig. 2, electrophoresis was completed after about 11 minutes using the acetonitrile-modified capillary. At voltages above 2000 V, protein aggregation was observed occasionally. Thus, in this Example, the optimum electrophoresis conditions were revealed to be the use of the acetonitrile-modified capillary and an applied voltage of 1000 V.

Furthermore, electrophoresis results of the samples using the respective capillaries are shown in Table 2. Table 2 contains data of band position and width (both in mm unit) for each protein electrophoresed in each capillary at a voltage of 1000 V. The electrophoretic position is defined as the distance from the electrode to the center of each band.

Under these experimental conditions, electrophoresis using the acetonitrile-modified capillary yielded small variations in the electrophoretic mobility and thus is highly reproducible. Consequently, the acetonitrile-modified capillary is a preferred substrate for protein isoelectric focusing according to the present invention.

**Table 2**

| Concentration | | | cytochrome c | hemoglobin | phycocyanin |
|---|---|---|---|---|---|
| No coating | 20µg/µL | Band position | 3±1 | 19±0 | 40±1 |
| | | Band width | 2±0 | 5±0 | 4± 1 |
| | 33µg/µL | Band position | 3±0 | 17±5 | 35±3 |
| | | Band width | 2±1 | 6±0 | 4±1 |
| | 62µg/µL | Band position | 14±1 | 30±1 | 45±3 |
| | | Band width | 2±0 | 9±1 | 4±1 |
| Acrylamide coating | 20µg/µL | Band position | N.D. | 10±4 | 26±6 |
| | | Band width | | 5±1 | 3±1 |
| | 33µg/µL | Band position | 9±6 | 20±6 | 44±6 |
| | | Band width | 2±0 | 6±0 | 4±0 |
| | 62µg/µL | Band position | 3±2 | 17±3 | 33±2 |
| | | Band width | 3±0 | 8±1 | 8±1 |
| Acetonitrile coating | 20µg/µL | Band position | N.D. | 15±0 | 32±1 |
| | | Band width | | 5±0 | 6±0 |
| | 33µg/µL | Band position | 4±1 | 20± 1 | 37±0 |
| | | Band width | 4±2 | 6±0 | 5± 1 |
| | 62µg/µL | Band position | 13±2 | 27±1 | 41±2 |
| | | Band width | 3±0 | 9±0 | 7±0 |
| Hexadiene coating | _{20µg/µL} | Band position | 5±1 | 18±6 | 37±5 |
| | | Band width | 4±1 | 6±1 | 5±1 |
| | _{33µg/µL} | Band position | 14±2 | 32±2 | 49±2 |
| | | Band width | 4±0 | 7±0 | 5±1 |
| | _{62µg/µL} | Band position | 8±2 | 23±2 | 37±1 |
| | | Band width | 3±0 | 9±0 | 11±3 |
| HMDS coating | 20µg/µL | Band position | 31 ±8 | 47±7 | 64±2 |
| | | Band width | 3±1 | 5±1 | 3±0 |
| | _{33µg/µL} | Band position | 28±6 | 45±7 | 61±5 |
| | | Band width | 4±0 | 7±0 | 4±2 |
| | _{62µg/µL} | Band position | 35±2 | 43±6 | 63±2 |
| | | Band width | 3±0 | 9±1 | 8±2 |
| N=3 | | | | | |

### Example 2

### [Preparation of plasma-polymerized membranes]

Membranes with varying hydrophobicities were deposited onto the surfaces of glass substrates using the same experimental materials and plasma polymerization device as described above. The membranes were prepared using monomer substances of hexamethyldisiloxane, acetonitrile, styrene, 2, 3-epoxy-1-propanol, hexylamine, acetic acid, dimethyl sulfoxide, tetrahydrofuran, aminoacetaldehyde dimethylacetal, and acrylic acid.

A substrate was placed in the chamber, and then the chamber pressure was reduced to 5x10⁻⁶ Torr. The chamber was filled with each monomer compound at the vacuum level shown in Table 3. The discharge power was 200 W for all cases. Plasma-polymerized membranes were formed after discharging for a given length of time, and then the substrate was removed from the chamber. The refractive index, membrane thickness, and contact angle were determined for each plasma-polymerized membrane prepared, and the results are shown in Table 3.

The refractive index and membrane thickness were measured with an ellipsometer (EMS-1T (trade name); ULVAC).

The contact angle was measured with a contact angle meter (CA-X (trade name); Kyowa Interface Science Co., LTD.). Ultrapure water was used for the measurements.

**Table 3**

| Monomer | Vacuum level **(Torr)** | Refractive index | Thickness **(nm)** | Contact angle **(°)** |
|---|---|---|---|---|
| Hexamethyldisiloxane | **7.3 × 10**^{**-6**} | **1.541** | **105.1** | **94.9** |
| Acetonitrile | **5.3 × 10**^{**-3**} | **1.634** | **92.7** | **49.2** |
| Styrene | **6.0 × 10**^{**-4**} | **1.623** | **71.8** | **75.9** |
| 2,3-epoxy-1-propanol | **1.5 × 10**^{**-5**} | **1.49** | **51.1** | **54.3** |
| Hexylamine | **1.1 × 10**^{**-5**} | **1.551** | **134.5** | **80.4** |
| Acetic acid | **4.3 × 10**^{**-3**} | **1.493** | **59.5** | **54.7** |
| Dimethyl sulfoxide | **8.1 × 10**^{**-6**} | **1.679** | **58.2** | **64.9** |
| Tetrahydrofuran | **8.2 × 10**^{**-3**} | **1.962** | **48.9** | **66.2** |
| Aminoacetaldehyde dimethylacetal | **1.3 × 10**^{**-5**} | **1.503** | **63.2** | **39.5** |
| Acrylic acid | **1.3 × 10**^{**-5**} | **1.54** | **135.9** | **34** |
| Glass base material | | | | **35.7** |

Of the prepared plasma-polymerized membranes, the surface zeta potential was measured for the hexamethyldisiloxane- and hexylamine-derived plasma-polymerized membranes which exhibit larger contact angles and the aminoacetaldehyde dimethylacetal-derived plasma-polymerized membranes which exhibit smaller contact angles, as well as for the glass substrates without plasma polymerization.

The zeta potential varies with the pH value of the solvent, and was thus determined using various buffers listed in Table 4 (the pH ranges from 1.7 to 11). The results are shown in Table 5.

The zeta-potential was measured using an electrophoretic light scattering spectrophotometer (ELS-800 (trade name); Otsuka Electronics Co., Ltd.).

**Table 4**

| pH | Buffer | **NaCl** conc. **(mM)** |
|---|---|---|
| **1.7** | **0.05M** Oxalate | **10** |
| **4** | **0.05M** Phthalate | **10** |
| **5.5** | **0.05M MES** | **10** |
| **6** | **0.05M MES** | **10** |
| **7** | **0.05M Tris-HCl** | **10** |
| **8** | **0.05M Tris-HCl** | **10** |
| **9** | **0.05M Tris-HCl** | **10** |
| **10** | **0.05M CAPS** | **10** |
| **11** | **0.05M CAPS** | **10** |
| **MES** : 2-morpholinoethanesulfonic acid | | |
| **TrisHCl** : Tris hydroxy aminomethane | | |
| **CAPS** : N-cyclohexyl-3-aminopropanesulfonic acid | | |

**Table 5**

| | Zeta potential (mV) | | | |
|---|---|---|---|---|
| pH | Hexamethyl disiloxane | Hexylamine | Aminoacetaldehyde dimethylacetal | Glass base material |
| **1.7** | **-1.1** | **12.9** | **28.2** | **-6.3** |
| **4** | **-23.35** | **-3.5** | **9.65** | **-21.35** |
| **5.5** | **-34.5** | **44.9** | **36.65** | |
| **7** | **-36.6** | **30.5** | **17.6** | **-42 (pH6.7)** |
| **8** | **-46. 1** | **20. 3** | **17. 4** | |
| **9** | **-62.9** | **17.6** | **19.9** | **-68.8** |
| **10** | **-62.55** | **-38.35** | **-13.5** | **-70.2** |
| **11** | **-63.7** | **-42.4** | **-3.7** | **-52.55** |

Based on the results described above, the plasma-polymerized membranes have the following characteristics regarding hydrophobicity and zeta-potential.

The aminoacetaldehyde dimethylacetal-derived plasma-polymerized membrane has a positive zeta potential and is highly hydrophilic.

The hexylamine-derived plasma-polymerized membrane has a positive zeta potential and is highly hydrophobic.

The hexamethyldisiloxane-derived plasma-polymerized membrane has a negative zeta potential and is highly hydrophobic.

These results suggest that benzene derivatives or compounds that contain many carbon atoms can be used as monomers to form hydrophobic plasma-polymerized membranes, and compounds that contain many oxygen atoms can be used to prepare hydrophilic membranes. The results also suggest that amine-containing monomers can be used to confer positive zeta-potentials on polymerized membranes and conversely, monomers containing many hydroxyl groups, carboxylic acids, or the like can be used to confer negative zeta potentials on polymerized membranes.

### Example 3

### [Preparation of surface-polymerized membranes]

### 1. Introduction of hydrophobic functional groups

Triethoxyvinylsilane (Silicon Chemicals LC-2300; Shin-Etsu Chemical Co., Ltd.), which provides hydrophobic functional groups, was dissolved in toluene at a concentration of 3 mM. A washed glass substrate was immersed in this solution at 80°C for 8 hours. After the reaction, the glass substrate was washed with toluene and then with ethanol, and dried under vacuum to give a substrate introduced with vinyl groups.

### 2. Surface polymerization

35 ml of tetrahydrofuran (THF) as a polymerization solvent was placed in an Erlenmeyer flask, and the vinyl group-introduced substrate was immersed in it. 50 µmol of 2, 2'-azobis(isobutyronitrile) (AIBN) was added to the solution as a polymerization initiator. The Erlenmeyer flask was sealed with a rubber stopper, and the air inside the flask was replaced with nitrogen. Then, the flask was shaken at 55°C for 1 hour. 10 mmol of each monomer (styrene, acrylamide, and a mixture of styrene and acrylamide) was dissolved in 15 ml of THF, and each of the monomer solutions was transferred to the reaction solution described above using a syringe to exclude air. The monomers were polymerized for 24 hours. After the reaction, the substrates were washed with THF, and then with ethanol to prepare substrates coated with surface-polymerized membranes.

The contact angles and zeta potentials of the surface-polymerized membranes obtained were determined by the same procedure as described in Example 2. The results for the contact angle and zeta potential are shown in Tables 6 and 7, respectively.

**Table 6**

| Surface polymerized film | Contact angle (° ) |
|---|---|
| Polystyrene | **73. 5** |
| Poly(styrene-co-acrylamide) **(50:50)** | **55. 3** |
| Polyacrylamide | **9.4** |
| Glass base material | **35. 7** |

**Table 7**

| pH | Zeta potential (mV) | | | |
|---|---|---|---|---|
| | Glass base material | Polystyrene | Poly(styrene-co-acrylamide) (50 : 50) | Polyacrylamide |
| **1.7** | **-6.3** | **-15.6** | **-16** | **-9.9** |
| **4** | **-12.1** | **-19.4** | **-14.1** | **-5.9** |
| **5.5** | **-32.6** | **-18.1** | **-25.7** | **-7.2** |
| **7** | **-50.4** | **-26.1** | **-15.2** | **-6.7** |
| **8** | **-58.7** | **-36.5** | **-35.3** | **-12.7** |
| **9** | **-83.3** | **-56.2** | **-42.2** | **-7** |
| **10** | **-89.3** | **-57.9** | **-60.7** | **-0.7** |
| **11** | **-60.4** | **-54.3** | **-35.7** | **-6.4** |

By copolymerizing acrylamide with styrene at different ratios, the polymer formed was more hydrophobic with increasing amounts of styrene monomer, and more hydrophilic with increasing amounts of acrylamide monomer. As the amount of acrylamide increased, the zeta potential became less negative.

### Example 4

### [Preparation of polymer-bound membranes]

### 1. Introduction of functional groups

Aminopropyltriethoxysilane (Silicon Chemicals LC-4480, Shin-Etsu Chemical Co., Ltd.) was dissolved in toluene at a concentration of 3 mM. A washed glass substrate was immersed in this solution at 80°C for 8 hours. After the reaction, the glass substrate was washed with toluene and then with ethanol, and dried under vacuum to give an amino group-introduced substrate.

### 2. Immobilization of polymer compounds

### (1) Polymer-bound membrane prepared using polyacrylic acid

14.4 mg of polyacrylic acid (polyacrylic acid 25000; Wako Pure Chemical Industries) was dissolved in 20 ml of 100 mM HEPES (pH 7.0), and then the amino group-introduced substrate was immersed in this solution. N-hydroxysuccinimide (NHS) and 1-ethyl-3-(3-dimethylaminopropyl) carbodiimide hydrochloride (0.1 mmol each) were added to the solution. The mixture was incubated for 24 hours under agitation. After the reaction, the substrate was washed with ultrapure water, and dried under vacuum to give a polyacrylic acid-modified substrate.

### (2) Polymer-bound membrane prepared using polyallylamine

The amino group-introduced substrate described above was immersed in a 100 mM HEPES buffer (pH 7.0) containing 3 mM glutalaldehyde for 8 hours under agitation. After the reaction, the substrate was washed with ultrapure water and dried under vacuum to give an aldehyde group-introduced substrate.

18.7 mg of polyallylamine (polyallylamine hydrochloride (trade name); Aldrich) was dissolved in 20 ml of 100 mM HEPES (pH 7.0), and the aldehyde group-introduced substrate was immersed in this solution for 24 hours under agitation. After the reaction, the substrate was washed with ultrapure water and dried under vacuum to give a polyallylamine-modified substrate.

By the same procedure described in Example 2, the contact angles and zeta potentials were determined for the polymer-coated surfaces of the substrates modified with polyacrylic acid and those with polyallylamine. The results for the contact angle and zeta-potential are shown in Tables 8 and 9, respectively.

**Table 8**

| Deposition polymer film | Contact angle (° ) |
|---|---|
| Polyacrylic acid | **37.9** |
| Polyallylamine | **33.8** |
| Glass base material | **35.7** |

**Table 9**

| | Zeta potential **(mV)** | | |
|---|---|---|---|
| pH | Glass base material | Polyacrylic acid | Polyallylamine |
| **1.7** | **-6.3** | **5.9** | **30.8** |
| **4** | **-12. 1** | **9. 7** | **6. 6** |
| **5.5** | **-32.6** | **-15.8** | **50.6** |
| **7** | **-50.4** | **-43.6** | **18.9** |
| **8** | **-58.7** | **-51.4** | **6.9** |
| **9** | **-83.3** | **-63** | **-9.1** |
| **10** | **-89.3** | **-58.2** | **-43.1** |
| **11** | **-60.4** | **-51** | **-43.4** |

### Example 5

### [Preparation of surface-polymerized membranes]

### 1. Surface polymerization

50 mL of ultrapure water as a polymerization solvent was placed in an Erlenmeyer flask. Sodium vinyl sulfonate (10 mmol) as a vinyl monomer was dissolved in the solution. The vinyl group-introduced substrate prepared by the procedure described above in Example 3 was immersed in the solution. N,N,N',N'-tetramethylethylene diamine or 2,2-azobis(2-amidinopropane) diacetic acid salt (50 µmol) was added to the solution as a polymerization initiator. The flask was sealed with a rubber stopper, and the air inside the flask was replaced with nitrogen. Then, the flask was shaken at 55°C for 24 hours. After the reaction, the substrate was washed with water to give a surface-polymerized substrate.

50 mL of ultrapure water as a polymerization solvent was placed in an Erlenmeyer flask, and diallyl dimethyl ammonium chloride (100 mmol) as a vinyl monomer was dissolved in this solution. The vinyl group-introduced substrate prepared by the procedure described above in Example 3 was immersed in the solution. N,N,N',N'-tetramethylethylene diamine or 2,2-azobis(2-amidinopropane) diacetic acid salt (500 µmol) was added to the solution as a polymerization initiator. The flask was sealed with a rubber stopper, and the air inside the flask was replaced with nitrogen. Then, the flask was shaken at 55°C for 48 hours. After the reaction, the substrate was washed with water to give a surface-polymerized substrate.

The contact angles and zeta potentials of the surface-polymerized membranes obtained were determined by the same procedure described in Example 2, except that the buffer used was a mixture of citric acid (0.0143 M), potassium dihydrogen phosphate (0.0143 M), boric acid (0.0143 M), and NaCl (10 mM), and that the pH values used were those shown in Table 10 (pH was adjusted using an aqueous NaOH solution). The contact angles and zeta potentials determined are shown in Table 10.

### Example 6

### [Preparation of polymer-bound membranes]

### 1. Introduction of functional groups

3-glycidoxypropyltriethoxysilane (Silicon Chemicals LS-2940 (trade name); Shin-Etsu Chemical Co., Ltd.) was dissolved in toluene at a concentration of 3 mM. A washed glass substrate was immersed in this solution at 80°C for 8 hours. After the reaction, the glass substrate was washed with toluene and dried under vacuum to give a glycidyl group-introduced substrate.

### 2. Immobilization of polymer compounds

8.8 mg of polyvinyl alcohol (polyvinyl alcohol (trade name); Wako Pure Chemical Industries) was dissolved in 20 ml of 100 mM HEPES buffer (pH 7.0). A washed substrate was immersed in the solution for 24 hours under agitation. After the reaction, the substrate was washed with ultrapure water and dried under vacuum to give a polymer-modified substrate.

The contact angles and zeta potentials of the polymer-modified substrates obtained were determined by the same procedure described in Example 5. The contact angles and zeta potentials determined are shown in Table 10.

**Table 10**

| | Example 5 | | Example 6 |
|---|---|---|---|
| | Zeta potential (mV) | | |
| pH | Vinyl sulfonate (strong anion) | Diallyl dimethyl ammonium (strong cation) | Polyvinyl alcohol |
| **2. 7** | **-72.3** | **38.6** | **-3.1** |
| **4** | **-85.1** | **28.8** | **-8.6** |
| **5** | **-81.7** | **20.7** | **0.5** |
| **6** | **-80** | **13.6** | **-7** |
| **7** | **-78. 1** | **8. 9** | **-2. 5** |
| **8** | **-67. 5** | **11.6** | **-4. 7** |
| **9** | **-78.5** | **14.6** | **-4** |
| **10** | **-83.1** | **10.9** | **-13.7** |
| Contact angle (° ) | **14.8** | **14.6** | **64.4** |

### Industrial Applicability

The present invention provides electrophoretic separation methods and devices that enable the various properties of the substrate surface that comes in contact with an electrophoresis medium to be controlled. Substrates such as glass that retain the electrophoresis separation medium sometimes give artifactual electrophoretic separation results. According to the present invention, glass surfaces can be modified by coating with plasma-polymerized membranes, surface-polymerized membranes, or polymer-bound membranes. As a result, such coatings are useful in producing suitable substrates for electrophoresis separations.

The method for producing plasma-polymerized membranes can be applied to micro-structures. Moreover, a large number of substrates can be treated at the same time using this method. In other words, this technology is useful for mass producing electrophoretic substrates in uniform quality, and thus has shown to be industrially applicable.

Surface polymerization can be used to form a desired polymer membrane on desired areas of a substrate surface without membrane abrasion.

Furthermore, surface polymerization can be used to form a desired polymer membrane on desired areas while membrane thickness is readily controlled.

Specifically, the present invention provides simple methods for separating and analyzing a large number of samples at a time on miniaturized substrates.

## Claims

1. A method for separating a substance, comprising the steps of:
(a) adding the substance to be analyzed to a separation medium retained in a substrate, wherein the surface of the substrate that comes into contact with the separation medium has been coated with a polymer membrane; and
(b) applying separation pressure to the separation medium.

2. The method according to claim 1, wherein the polymer membrane is a plasma-polymerized membrane obtained by plasma polymerization.

3. The method according to claim 2, wherein the plasma-polymerized membrane is formed by plasma polymerization using a monomer selected from the group consisting of hexadiene, hexamethyldisiloxane, acetonitrile, hexylamine, and aminoacetaldehyde dimethylacetal.

4. The method according to claim 1, wherein the polymer membrane is a surface-polymerized membrane obtained by polymerizing polymerizable monomers on the substrate surface.

5. The method according to claim 4, wherein the surface-polymerized membrane is immobilized onto the substrate surface via a hydrophobic spacer and is covalently linked to the hydrophobic spacer with a carbon-carbon single bond.

6. The method according to claim 5, wherein the hydrophobic spacer is an alkyl group of 2 to 6 carbon atoms.

7. The method according to claim 1, wherein the polymer membrane is a polymer-bound membrane obtained by binding a polymer compound onto the substrate surface.

8. The method according to claim 7, wherein the polymer-bound membrane is formed by covalently linking, onto the substrate, a polymer compound selected from the group consisting of polystyrene, polyallylbenzene, polyvinyl alcohol, polyacrylamide, polyvinyl sulfonate, polyacrylic acid, polydiallyl dimethylammonium salt, polyallylamine, and polyethylene glycol.

9. The method according to any one of claims 1 to 8, wherein the substrate is a planar basal plate.

10. The method according to any one of claims 1 to 9, wherein the substrate is made of glass.

11. The method according to any one of claims 1 to 10, wherein the principle of separation is electrophoresis.

12. The method according to claim 11, wherein the principle of electrophoresis is isoelectric focusing.

13. The method according to any one of claims 1 to 12, wherein the substance to be separated is a protein.

14. A method for producing a separatory and analytical substrate, which comprises the step of forming a plasma-polymerized membrane on a substrate surface by plasma polymerization.

15. The method according to claim 14, wherein the plasma-polymerized membrane is formed on the substrate surface by plasma polymerization of a monomer selected from the group consisting of hexadiene, hexamethyldisiloxane, acetonitrile, hexylamine, and aminoacetaldehyde dimethylacetal.

16. A method for producing a separatory and analytical substrate, which comprises the step of forming a surface-polymerized membrane by polymerizing polymerizable monomers on a substrate surface.

17. The method according to claim 16, wherein the substrate surface has a hydrophobic functional group having a double bond at its end and the method comprises polymerizing a polymerizable monomer with the hydrophobic functional group.

18. The method according to claim 17, wherein the hydrophobic functional group is an alkenyl group of 2 to 6 carbon atoms having a double bond at its end.

19. A method for producing a separatory and analytical substrate, which comprises the step of forming a polymer-bound membrane by immobilizing a polymer compound onto a substrate surface.

20. The method according to claim 19, wherein the polymer-bound membrane is formed by covalently linking onto a substrate a polymer compound selected from the group consisting of polystyrene, polyallylbenzene, polyvinyl alcohol, polyacrylamide, polyvinyl sulfonate, polyacrylic acid, polydiallyl dimethylammonium salt, polyallylamine, and polyethylene glycol.

21. The method according to any one of claims 14 to 20, wherein the substrate is a planar basal plate.

22. The method according to any one of claims 14 to 21, wherein the substrate is made of glass.

23. A method for modifying the surface of a separatory and analytical substrate, which comprises the step of forming a plasma-polymerized membrane on the substrate surface.

24. A method for modifying the surface of a separatory and analytical substrate, which comprises the step of forming a surface-polymerized membrane by polymerizing polymerizable monomers on the substrate surface.

25. A method for modifying the surface of a separatory and analytical substrate, which comprises the step of forming a polymer-bound membrane by immobilizing a polymer compound onto a substrate surface.

26. A separatory and analytical substrate whose surface that comes into contact with a separation medium has been coated with a polymer membrane.

27. The separatory and analytical substrate according to claim 26, wherein the polymer membrane is a plasma-polymerized membrane prepared by plasma polymerization.

28. The separatory and analytical substrate according to claim 26, wherein the polymer membrane is a surface-polymerized membrane obtained by polymerizing polymerizable monomers on the surface of a substrate.

29. The separatory and analytical substrate according to claim 26, wherein the polymer membrane is a polymer-bound membrane obtained by binding a polymer compound onto a substrate surface.

30. An electrophoretic analyzer composed of the following elements:
(a) a substrate for retaining an electrophoretic medium, wherein the surface of the substrate that comes into contact with the medium has been coated with a polymer membrane; and
(b) electrodes for applying voltage to the electrophoretic medium retained in the substrate.
